# EUROPÄISCHE PATENTSCHRIFT

(11) **EP 1 889 814 B1**
(45) Veröffentlichungstag und Bekanntmachung des Hinweises auf die Patenterteilung: **24.10.2012**
(21) Anmeldenummer: 07113934.9
(22) Anmeldetag: 07.08.2007
(51) Int. Cl.: C02F 1/66, C02F 1/20, C02F 1/04, C01B 7/03, C02F 1/58

(54) **Verfahren zur Entfernung von Chlorid**
Method for removing chloride
Procédé destiné au retrait de chlorure

(30) Priorität: 07.08.2006 EP 06118534
(43) Veröffentlichungstag der Anmeldung: 20.02.2008
(73) Patentinhaber: Grillo-Werke AG, D-47169 Duisburg (DE)
(72) Erfinder: Driemel, Klaus, 47169 Duisburg (DE); Biertümpel, Ingo, Dr., 47169 Duisburg (DE); Gross, Oliver, Dr., 47169 Duisburg (DE)
(74) Vertreter: von Kreisler Selting Werner

(56) Entgegenhaltungen:
- DE-A1- 4 111 718
- DE-A1-102004 016 792
- US-A- 4 462 976

## Beschreibung

Die vorliegende Erfindung betrifft ein Verfahren zur Entfernung von Chlorid aus einer chloridhaltigen wässrigen Lösung, wobei die chloridhaltige wässrige Lösung und eine Säure separat und kontinuierlich in einem Reaktionsraum miteinander in Kontakt gebracht werden und entstehende Salzsäure durch Strippen aus dem Gemisch entfernt wird.

Chloridionen bilden eine häufig vorkommende Verunreinigung wässriger Lösungen. Die Gegenwart von Chloridionen bringt eine Reihe von Nachteilen mit sich. So können Chloridionen die Korrosion von Behältern aus rostfreiem Stahl beschleunigen, was z.B. bei hydrometallurgischen Prozessen, wie der Herstellung von Zinksulfatlösungen aus zinkhaltigen Materialien, Probleme bereiten kann.

Darüber hinaus kann die Gegenwart von Chloridionen in Elektrolysebädern zur Freisetzung von giftigem, korrosivem Chlorgas an der Anode führen. Dies hat bei Verwendung einer Bleianode deren verstärkte Korrosion sowie im weiteren Verlauf eine Verunreinigung der Kathode mit elementarem Blei zur Folge.

Im Stand der Technik sind bereits Methoden zur Entfernung von Chloridionen aus wässrigen Lösungen bekannt. So wird in der GB 1484819 Kupferoxid zu einer wässrigen chloridhaltigen Lösung gegeben, wobei schwerlösliches Kupferchlorid entsteht, welches ausfällt und aus der Lösung entfernt werden kann. Der Nachteil bei diesem Vorgehen besteht darin, dass in der wässrigen Lösung überschüssige Kupferionen enthalten sind, von denen die Lösung wieder befreit werden muss.

Die US 4,717,450 beschreibt die Entfernung von Chloridionen aus wässriger Lösung mittels eines elektrochemischen Verfahrens, wobei die Chloridionen nach Anlegen einer Potentialdifferenz in einem elektrochemischen Reaktor durch eine Anionen-selektive Membran wandern und somit aus der Lösung entfernt werden.

Aus der US 2005092618 ist eine photovoltaisch betriebene elektrolytische Zelle zur Entfernung von Chloridionen aus wässriger Lösung durch anodische Oxidation zu Chlorgas bekannt. Dieses ist allerdings äußerst giftig und korrosiv, was zu erheblichen Sicherheitsvorkehrungen zur Vermeidung von Schäden an Mensch und Umwelt zwingt.

US-A-4 462 976 oder DE 41 11 718 offenbaren Verfahren zur Entfernung von Chlorid aus einer chloridhaltigen wässerigen Lösung, bei denen die chloridhaltige Lösung mit einer Säure separat und kontinuierlich in einem Reaktionsraum miteinander in Kontakt gebracht werden und anschließend Salzsäure durch Strippen in einer separaten Destillationskolonne aus dem Gemisch entfernt wird.

Das zu lösende technische Problem besteht darin, ein Verfahren zur Verfügung zu stellen, welches eine quantitative Entfernung von Chloridionen aus wässriger Lösung ermöglicht und dabei die Nachteile des Stands der Technik vermeidet.

Gelöst wird dieses Problem durch ein Verfahren zur Entfernung von Chlorid aus einer chloridhaltigen wässrigen Lösung gemäß Anspruch 1, wobei die chloridhaltige wässrige Lösung und eine Säure separat und kontinuierlich im Kopf einer Destillationskolonne als Reaktionsraum miteinander in Kontakt gebracht werden und entstehende Salzsäure durch Strippen aus dem Gemisch entfernt wird, wobei die entstehende Salzsäure in höherer Konzentration als der des azeotropen Gemisches anfällt.

Dies liegt überraschenderweise über der Konzentration von 20,2 Vol-% HCl des azeotropen Gemisches HCl/H₂O (Sdp. 108,6°C) und ist normalerweise ohne aufwendige Rektifikationsverfahren nicht zu erreichen. Ohne sich theoretisch festlegen zu wollen, besteht die Möglichkeit, dass das hier vorliegende Mehrphasensystem Säure-HCl-H₂O/Chloridionen andere Eigenschaften aufweist als das Zweiphasensystem HCl-H₂O.

"Strippen" im Sinne der vorliegenden Erfindung bedeutet, dass die entstehende gasförmige Salzsäure mittels einer oder mehrerer im Reaktionsraum vorhandener oder gebildeter oder von außen zugeführter gasförmiger Verbindung(en) aus dem Reaktionsraum entfernt und gegebenenfalls räumlich getrennt durch Abkühlung wieder kondensiert wird. Dabei kann das Strippen bevorzugt mittels Einleitung von H₂O-Dampf in den Reaktionsraum erfolgen. Ferner kann das Strippen im Gegenstromverfahren durchgeführt werden.

Es kann bevorzugt sein, dass es sich bei der chloridhaltigen wässrigen Lösung um Prozesswasser, wie z.B. Mutterlauge, galvanische Bäder, Elektrolysebäder oder Membranabläufe handelt. Dieses Prozesswasser kann u.a. bei der Metallsalzherstellung oder der galvanischen Metallherstellung anfallen. Besonders bevorzugt enthält die wässrige Lösung Zinkchlorid.

Die chloridhaltige wässrige Lösung hat typischerweise einen pH-Wert von4-5.

Die Temperatur im Reaktionsraum beträgt erfindungsgemäß bei Normaldruck 100-130°C, bevorzugt 100-120°C. Das erfindungsgemäße Verfahren kann auch unter reduziertem Druck bzw. Vakuum durchgeführt werden, wobei sich die erforderlichen Temperaturen im Reaktionsraum aufgrund des niedrigeren Siedepunktes der wässrigen Lösung entsprechend verändern.

Das erfindungsgemäße Verfahren ist dadurch gekennzeichnet, dass der Reaktionsraum der Kopf einer Destillationskolonne ist. Besonders bevorzugt ist die Verwendung einer Strippkolonne.

Die zum Einsatz gelangende Säure muss generell eine höhere Säurestärke als HCl aufweisen, um letztere aus den in der wässrigen Lösung enthaltenen Chloridsalzen freizusetzen. Dabei sind erfindungsgemäß sowohl anorganische als auch organische Säuren geeignet. Bevorzugt kann die Säure ausgewählt sein aus der Gruppe bestehend aus Schwefelsäure, Salpetersäure, Methansulfonsäure und Selensäure.

Die bei Durchführung des erfindungsgemäßen Verfahrens durch das Strippen aus dem Gemisch entfernte, gasförmige Salzsäure kann aus dem Reaktionsraum abgeleitet und als wässrige Lösung kondensiert werden.

Es kann bevorzugt sein, zur Durchführung des erfindungsgemäßen Verfahrens Schwefelsäure in hoher Konzentration, z.B. technisch übliche Konzentrationen wie 70 - 98 Vol% zu verwenden. Dabei lässt sich bei einem Mengenverhältnis von Säure zu wässriger Lösung (bei Verwendung einer 78 Vol% Schwefelsäure) von mindestens 1,5 eine HCl-Lösung mit einer Konzentration von mindestens 30 Vol-% bei gleichzeitiger handelsüblicher Reinheit gewinnen.

Ebenso kann bevorzugt sein, dass bei Verwendung einer Schwefelsäure mit einer Konzentration von 78 vol% ein Mengenverhältnis von Säure zu wässriger Lösung von kleiner als 1,5 eingestellt wird. In diesem Fall wird eine HCl-Lösung mit einer Konzentration von weniger als 30 vol% erhalten.

Bei Durchführung des erfindungsgemäßen Verfahrens wird eine signifikante Verringerung der Chloridionenkonzentration erzielt, wobei der exakte Wert von dem Mengenverhältnis Säure zu wässriger Lösung abhängt. Bevorzugt wird ein Mengenverhältnis Säure zu wässriger Lösung von mindestens 1,5 eingesetzt, was zu einer Abreicherung an Chloridionen der chloridhaltigen wässrigen Lösung von mindestens 90% führt.

Generell ist aus energetischen Gründen ein Minimum des spezifischen Dampfverbrauches (kg/l Mutterlauge) anzustreben, obwohl ein höherer spezifischer Dampfverbrauch in der Regel höherer HCl-Abscheidegrade zur Folge hat. Bei einem niedrigen spezifischen Dampfverbrauch werden im Allgemeinen jedoch höhere HCl-Konzentrationen im Kopf erzielt. Um in solchen Fällen bei sonst konstanten Parametern vergleichbar hohe HCl-Abscheidegrade wie im Fall eines hohen spezifischen Dampfverbrauches zu erzielen, ist eine größere Kolonnenhöhe erforderlich.

Gleiches gilt für den Fall einer höheren Chlorid-Konzentration im Zulauf. Bei einer niedrigen Chloridkonzentration werden in der Regel höhere Abscheidegrade erzielt. Um bei hohen Chloridgehalten im Zulauf bei sonst konstanten Parametern ähnlich hohe HCl-Abscheidegrade zu erzielen, ist ebenfalls eine größere Kolonnenhöhe erforderlich.

Die Erfindung wird durch die nachfolgenden Beispiele näher erläutert.

### Beispiel 1

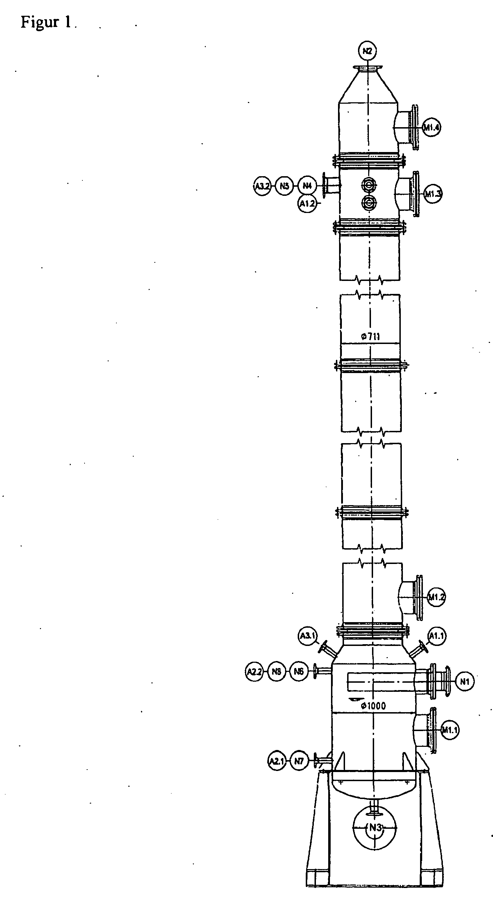

Zur Durchführung des erfindungsgemäßen Verfahrens wird eine Dampf-Strippkolonne aus V2A-Stahl mit 600 mm Kolonnendurchmesser und einer Schüttungshöhe von 7m eingesetzt. Die Figur 1 zeigt eine aus V2A-Stahl hergestellte Dampf-Strippkolonne, die mit einem Inliner in Form einer Rotationsbeschichtung aus Material E-TFE ausgekleidet wird und mit der das erfindungsgemäße Verfahren ausgeführt werden kann. Der Trennvorgang der Umwandlung von Chloriden zur Salzsäure findet in der Strippkolonne an einer Füllkörperschüttung aus PVDF-Füllkörpern im Gegenstrom zum aufsteigenden Dampf statt. Die Kolonne gemäß der Figur 1 weist die folgenden Stutzen auf:

| **Pos. (Nr.)** | **Bezeichnung** |
|---|---|
| N1 | Dampf Eintritt |
| N2 | Gas Austritt |
| N3 | Ablauf |
| N4 | Mutterlauge Zulauf |
| N5 | Schwefelsäure Zulauf |
| N6 | Wasser Zulauf |
| N7 | Notüberlauf |
| N8 | Rücklauf v. Notüberlaufbehälter |
| M1 | Handloch |
| A1 | Druckmessung |
| A2 | Niveaumessung |
| A3 | Temperaturmessung |

Die Anlage wird bei Normaldruck p = 1 bar sowie einer Temperatur von 120°C betrieben. Es werden Schwefelsäure mit einer Konzentration von 78 vol% als Säure sowie als Mutterlauge eine wässrige Lösung mit 10-20 Gew.% Zinkchlorid und einem pH-Wert von 2-3 verwendet.

Die jeweils auf 80-100°C vorgewärmte Schwefelsäure sowie die Mutterlauge werden aus ihren getrennten Vorlagebehältern auf den Kopf der Strippkolonne gepumpt und in dem Flüssigkeitsverteiler vermischt. Durch die Zugabe von H₂SO₄ zu der Mutterlauge wird deren pH-Wert soweit gesenkt, dass gasförmige Salzsäure (HCl) freigesetzt wird. Diese wird in der Strippkolonne mit dem im Gegenstrom aufsteigenden Dampf aus dem Sumpf der Strippkolonne in den Kondensator abgeführt und dort mit Kühlwasser kondensiert.

Während des Strippvorgangs in der Strippkolonne erfolgt die gleichzeitige Umwandlung des in der Mutterlauge enthaltenen Zinkchlorids in Zinksulfat. Um einer Ausfällung von Zinksulfat vorzubeugen, wird in den Sumpf der Strippkolonne chloridarmes Wasser zugegeben. Die von Chloridionen abgereicherte Mutterlauge wird aus dem Sumpf der Strippkolonne abgezogen und steht zur Weiterverarbeitung zur Verfügung. Es wird eine Abreicherung an Chloridionen von mindestens 90% erzielt.

### Beispiel 2

Das erfindungsgemäße Verfahren wird mittels einer Glaskolonne, die eine Höhe von 2,5 m sowie einen Durchmesser von 42 cm aufweist, durchgeführt. Diese Kolonne besitzt keramische Raschigringe mit den Abmessungen 8x8x2 mm als Füllkörper. Die Durchführung des erfindungsgemäßen Verfahrens erfolgte allgemein wie in Beispiel 1, wobei die genauen Prozessparameter der beiden mit dieser Kolonne durchgeführten Experimente in Tabelle 1 aufgeführt sind.

**Tabelle 1: Prozessparameter des erfindungsgemäßen Verfahrens in zwei verschiedenen Experimenten 1 und 2**

| | | Exp. 1 | Exp. 2 |
|---|---|---|---|
| Durchfluss Mutterlauge | l/h | 1,324 | 1,324 |
| Durchfluss Schwefelsäure | l/h | 2,500 | 3,600 |
| Durchfluss Wasser | l/h | 1,469 | 1,946 |
| Durchfluss Destillat (Dampf) | l/h | 1,014 | 0,586 |
| | | | |
| Temperatur Zulauf | °C | 69 | 69 |
| Temperatur Kopf | °C | 112 | 109 |
| Temperatur Sumpf | °C | 120 | 115 |
| | | | |
| Konzentration HCl Zulauf | % | 12,90 | 10,38 |
| Konzentration HCl Destillat | g/l | 337,00 | 504,07 |
| HCl-Abscheidegrad | % | 93,18 | 100,00 |
| Konzentration Schwefelsäure | % | 78,00 | 78,00 |
| | | | |
| Dampfverbrauch | kg/l Mutterlauge | 0,7659 | 0,4426 |
| Schwefelsäureverbrauch | kg/l Mutterlauge | 1,882 | 2,7190 |
| Wasserverbrauch | l/l Mutterlauge | 1,1095 | 1,4698 |
| | | | |
| spezifische Dampfbelastung der Kolonne | m³/m² x h | 910,8 | 738,4 |
| spezifische Flüssigkeitsbelastung der Kolonne | kg/m² x h | 4510,6 | 5860,4 |

Wie sich Tabelle 1 entnehmen lässt, werden mit dem erfindungsgemäßen Verfahren unter Verwendung 78%iger Schwefelsäure HCl-Abscheidegrade von 93,18% (Experiment 1) bzw. 100% (Experiment 2) erzielt.

## Patentansprüche

1. Verfahren zur Entfernung von Chlorid aus einer chloridhaltigen wässrigen Lösung, wobei die chloridhaltige wässrige Lösung und eine Säure separat und kontinuierlich im Kopf einer Destillationskolonne als Reaktionsraum miteinander in Kontakt gebracht werden und entstehende Salzsäure durch Strippen aus dem Gemisch entfernt wird, wobei die entstehende Salzsäure in höherer Konzentration als der des azeotropen Gemisches anfällt.

2. Verfahren gemäß Anspruch 1, **dadurch gekennzeichnet, dass** es sich bei der chloridhaltigen wässrigen Lösung um Prozesswasser handelt.

3. Verfahren gemäß Anspruch 2, **dadurch gekennzeichnet, dass** es sich bei dem Prozesswasser um Mutterlauge, galvanische Bäder, Elektrolysebäder oder Membranabläufe handelt.

4. Verfahren gemäß mindestens einem der Ansprüche 1-3, **dadurch gekennzeichnet, dass** im Reaktionsraum eine Temperatur von 100-130°C, bevorzugt von 100-120°C herrscht.

5. Verfahren gemäß mindestens einem der Ansprüche 1-4, **dadurch gekennzeichnet, dass** das Mengenverhältnis von Säure zu wässriger Lösung mindestens 1,5 beträgt.

6. Verfahren gemäß mindestens einem der Ansprüche 1-5, **dadurch gekennzeichnet, dass** die Säure ausgewählt ist aus der Gruppe bestehend aus Schwefelsäure, Salpetersäure, Methansulfonsäure und Selensäure.

7. Verfahren gemäß mindestens einem der Ansprüche 1-6, **dadurch gekennzeichnet, dass** das Strippen mittels Einleitung von H₂O-Dampf in den Reaktionsraum erfolgt.

8. Verfahren gemäß mindestens einem der Ansprüche 1-7, **dadurch gekennzeichnet, dass** die Schwefelsäure mit einer Konzentration von 70 - 98 % eingesetzt wird.

9. Verfahren gemäß mindestens einem der Ansprüche 1-8, **dadurch gekennzeichnet, dass** eine Abreicherung an Chloridionen der chloridhaltigen wässrigen Lösung von mindestens 90% erreicht wird.

10. Verfahren gemäß mindestens einem der Ansprüche 1-9, **dadurch gekennzeichnet, dass** die durch das Strippen aus dem Gemisch entfernte, gasförmige Salzsäure aus dem Reaktionsraum abgeleitet und als wässrige Lösung kondensiert wird.

11. Verfahren gemäß mindestens einem der Ansprüche 1-10, **dadurch gekennzeichnet, dass** die kondensierte Salzsäure eine Konzentration von mindestens 30 Vol-% aufweist.

## Claims

1. A process for removing chloride from a chloride-containing aqueous solution, wherein said chloride-containing aqueous solution and an acid are separately supplied to and contacted with one another in the head of a distillation column as a reaction space, and the hydrochloric acid produced is removed from the mixture by stripping, wherein the hydrochloric acid produced is obtained in a higher concentration than that of the azeotropic mixture.

2. The process according to claim 1, **characterized in that** said chloride-containing aqueous solution is process water.

3. The process according to claim 2, **characterized in that** said process water is mother liquor, electroplating baths, electrolytic baths, or membrane effluents.

4. The process according to at least one of claims 1-3, **characterized in that** a temperature of 100-130 °C, preferably 100-120°C, prevails in the reaction space.

5. The process according to at least one of claims 1-4, **characterized in that** the quantitative ratio of acid to aqueous solution is at least 1.5.

6. The process according to at least one of claims 1-5, **characterized in that** said acid is selected from the group consisting of sulfuric acid, nitric acid, methanesulfonic acid, and selenic acid.

7. The process according to at least one of claims 1-6, **characterized in that** said stripping is effected by introducing H₂O steam in the reaction space.

8. The process according to at least one of claims 1-7, **characterized in that** said sulfuric acid is employed at a concentration of from 70 to 98%.

9. The process according to at least one of claims 1-8, **characterized in that** a depletion of chloride ions in said chloride-containing aqueous solution of at least 90% is achieved.

10. The process according to at least one of claims 1-9, **characterized in that** the gaseous hydrochloric acid removed from the mixture by stripping is exhausted from the reaction space and condensed as an aqueous solution.

11. The process according to at least one of claims 1-10, **characterized in that** said condensed hydrochloric acid has a concentration of at least 30% by volume.

## Revendications

1. Procédé de retrait de chlorure à partir d'une solution aqueuse contenant du chlorure, la solution aqueuse contenant du chlorure et un acide étant mis en contact l'une avec l'autre séparément et de façon continue dans la tête d'une colonne de distillation en tant qu'espace de réaction, et l'acide chlorhydrique créé étant retiré du mélange par stripage, l'acide chlorhydrique créé étant présent en concentration plus élevée que celle du mélange azéotrope.

2. Procédé selon la revendication 1, **caractérisé en ce que**, concernant la solution aqueuse contenant du chlorure, il s'agit d'eau de process.

3. Procédé selon la revendication 2, **caractérisé en ce que**, concernant l'eau de process, il s'agit d'eau mère, de bains galvaniques, de bains d'électrolyse ou d'écoulements de membranes.

4. Procédé selon au moins une des revendications 1-3, **caractérisé en ce que**, dans l'espace de réaction, il règne une température de 100-130° C, de préférence de 100-120° C.

5. Procédé selon au moins une des revendications 1-4, **caractérisé en ce que** le rapport quantitatif de l'acide à la solution aqueuse est au moins égal à 1,5.

6. Procédé selon au moins une des revendications 1-5, **caractérisé en ce que** l'acide est sélectionné parmi le groupe constitué d'acide sulfurique, d'acide nitrique, d'acide méthane sulfonique et d'acide sélénique.

7. Procédé selon au moins une des revendications 1-6, **caractérisé en ce que** le stripage s'effectue au moyen d'introduction de vapeur H₂O dans l'espace de réaction.

8. Procédé selon au moins une des revendications 1-7, **caractérisé en ce que** l'acide sulfurique est mis en oeuvre avec une concentration de 70 - 98 %.

9. Procédé selon au moins une des revendications 1-8, **caractérisé en ce qu'**un appauvrissement d'au moins 90 % en ions chlorure de la solution aqueuse contenant du chlorure est atteint.

10. Procédé selon au moins une des revendications 1-9, **caractérisé en ce que** l'acide chlorhydrique gazeux retiré du mélange par stripage est évacué de l'espace de réaction et condensé sous forme de solution aqueuse.

11. Procédé selon au moins une des revendications 1-10, **caractérisé en ce que** l'acide chlorhydrique condensé présente une concentration d'au moins 30 %-vol.
